# EUROPEAN PATENT APPLICATION

(11) **EP 4 375 114 A1**
(43) Date of publication of application: **29.05.2024**
(21) Application number: 22209895.6
(22) Date of filing: 28.11.2022
(51) Int. Cl.: B60L 3/00, B60L 58/21, H01H 9/30

(54) **A METHOD FOR OPERATING A SWITCHING ARRANGEMENT OF AN ENERGY STORAGE SYSTEM OF A VEHICLE**

(71) Applicant: VOLVO TRUCK CORPORATION, 405 08 Göteborg (SE)
(72) Inventor: LIDSTRÖM, Emil, 423 56 TORSLANDA (SE); DOLADO, Ana, 28232 LAS ROSAS DE MADRID (ES)
(74) Representative: Kransell & Wennborg KB

(57) **Abstract**

A method for operating a switching arrangement of an energy storage system of a vehicle, the energy storage system comprising a plurality of parallelly arranged battery packs and the switching arrangement comprising an associated contactor for each battery pack, the contactors being configured to connect the battery packs to a power apparatus being a load and/or a power source by closing, and disconnect the battery packs from the power apparatus by opening. The method comprises:
- identifying a battery pack to be disconnected from the power apparatus, the battery pack being one of a plurality of battery packs connected to the power apparatus,
- providing measured current of the identified battery pack,
- in response to that that the measured current of the identified battery pack is higher than a predetermined threshold value, reducing the current of the identified battery pack, and
- in response to that the measured current of the identified battery pack is lower than the predetermined threshold value, or in response to that a predetermined time period has lapsed since the step of reducing the current of the identified battery pack, opening the contactor associated with the identified battery pack to disconnect the battery pack from the power apparatus.

## Description

### TECHNICAL FIELD

The present invention relates to a method for operating a switching arrangement of an energy storage system of a vehicle. The invention further relates to a switching arrangement for an energy storage system in a vehicle.

The invention is applicable on vehicles, in particularly heavy vehicles, such as e.g. trucks. However, although the invention will mainly be described in relation to a truck, the method is also applicable for other types of vehicles, such as buses, passenger cars, industrial construction machines, wheel loaders, etcetera.

### BACKGROUND

A vehicle typically comprises an engine for propelling the vehicle. The engine may be an internal combustion engine powered by e.g. liquid or gaseous fuel, or it may be an electric machine powered by electricity. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, several battery packs are included in the energy storage system by being parallelly connected to a common traction voltage bus (or common traction power bus). The load and/or power source is also connected to the common traction voltage bus. Hereby, the supplied power can be adapted based on the number of battery packs, and/or higher power requirements of the vehicle may be met. Typically, each battery pack is associated with a switch, or contactor, enabling connection and disconnection of the battery pack relative the common traction voltage bus and the load and/or power source. Thus, when a contactor is closed, the associated battery pack is connected to the common traction voltage bus and may power the load or receive charging power from the power source, and when a contactor is opened, the associated battery pack is disconnected from the common traction voltage bus. However, every time the state of a contactor is changed from closed to open, or vice versa, the contactor is subject to mechanical and electrical wear.

The electric wear of the contactor is typically higher than the mechanical wear, and thus more significant for determining the life length of the contactor. Electric wear may e.g. origin from electric arcs in the air gap of a non-closed contactor. Electric arcs typically appear when the voltage over the air gap exceeds the breakdown voltage of air (3kV/mm) or when an inductive circuit is broken since an inductor opposes a change of the current through it. The electric breakdown voltage will typically be exceeded when a contactor is opened under load since the air gap initially is zero. The resistivity of the resulting electric arc is low meaning that the electric arc will be sustained for a short time before it is interrupted. When a contactor is closed, on the other side, the electric breakdown voltage is typically exceeded just before the contactor reaches a fully closed state, resulting in a small electric arc. However, the electric wear originated by inductance can be much more severe than the wear from exceeding the electric breakdown voltage.

Contactor wear as described above may lead to contactor failure. In particular, premature contactor failure of a single contactor is undesirable, as sometimes more than the failing contactor have to be replaced, which may be very expensive.

### SUMMARY

It is an object of the present invention to at least to some extent alleviate the shortcomings discussed above in relation to known energy storage systems and battery packs, and to improve the operation of disconnecting the battery packs from a power apparatus being a load and/or a power source.

According to at least a first aspect of the present invention, a method for operating a switching arrangement of an energy storage system of a vehicle, the energy storage system comprising a plurality of parallelly arranged battery packs and the switching arrangement comprising an associated contactor for each battery pack, the contactors being configured to connect the battery packs to a power apparatus being a load and/or a power source by closing, and disconnect the battery packs from the power apparatus by opening, is provided. The method comprises:
- identifying a battery pack to be disconnected from the power apparatus, the battery pack being one of a plurality of battery packs connected to the power apparatus,
- providing measured current of the identified battery pack,
- in response to that that the measured current of the identified battery pack is higher than a predetermined threshold value, reducing the current of the identified battery pack, and
- in response to that the measured current of the identified battery pack is lower than the predetermined threshold value, or in response to that a predetermined time period has lapsed since the step of reducing the current of the identified battery pack, opening the contactor associated with the identified battery pack to disconnect the battery pack from the power apparatus.

Hereby, the contactor disconnecting the identified battery pack is subject to a lower contactor wear as the current of the identified battery pack is reduced to be below the predetermined threshold value, as compared to opening the contactor at a current of the identified battery pack over the predetermined threshold value. The step of reducing the current of the identified battery pack typically comprises actively reducing the current. By actively reducing the current of the identified battery pack prior to opening of the associated contactor, the contactor may be opened quicker, or sooner, as compared to not actively reducing the current, for the same level of contactor wear. According to at least one example embodiment, the predetermined threshold value is between 1 ampere - 15 ampere, e.g. between 2 and 10 ampere, such as e.g. 3 ampere or 5 ampere. According to at least one example embodiment, the predetermined time is between 50 ms and 5000 ms, e.g. between 100 ms and 1000 ms, e.g. between 200 ms and 800 ms, such as e.g. 500 ms.

The present invention is at least partly based on the insight that harmful currents may be present in an energy storage system comprising a plurality of parallelly connected battery packs despite that all loads (or power sources) are shut off, or have been turned off, or are in the process of ramping down, due to currents flowing between the battery packs. Such currents may be referred to as energy storage system internal currents, or multipack balancing currents. By actively reducing the current in the energy storage system at the position of the identified battery pack, possibly by the expense of increasing the current in the energy storage system at another position, the identified battery pack can be disconnected with a reduced contactor wear.

By reducing the contactor wear, the total life-length of the switching arrangement may be increased. Thus, excessive contactor wear of e.g. a single contactor, leading to contactor failure, as well as the overall contactor wear of the switching arrangement, may be reduced. The contactor wear may e.g. be due to the formation of electric arcs (arcing), and may be referred to as electric contactor wear. In other words, arcing in the contactor is reduced as the current of the identified battery pack is reduced to be below the predetermined threshold value prior to opening the contactor.

During the disconnection of the plurality of battery packs from the power apparatus by means of the associated contactors as described above, the battery packs are typically disconnected in a sequence. By reducing the current of the battery pack which is next in turn to be disconnected, the contactor wear associated with opening the contactor is reduced, as compared to not reducing the current of such battery pack. During disconnection of the last battery pack from the power apparatus, no current is typically flowing in the energy storage system if the power apparatus have already been shut off, why no active reduction in the current is needed when disconnecting the last battery pack from the power apparatus. The method may comprise alternately connecting and disconnecting the battery packs to and from the power apparatus, wherein the steps of disconnecting the battery packs form the power apparatus include controlling the current of the identified battery pack (to be disconnected next) as previously described.

It should be understood that the step of providing measured current of the identified battery pack may comprise a step of measuring (or determining) the current of the battery pack, prior to, or after identifying the battery pack to be disconnected next. That is, the step of measuring the current of the battery pack, or all of the battery packs, may be performed as a first step, whereafter the battery pack to be disconnected next from the power apparatus is determined in response to the step of measuring the current of the battery pack(s). For example, the battery pack to be disconnected next from the power apparatus may be determined to be the battery pack having the lowest measured current of the battery packs connected to the power apparatus. As an alternative, the step of identifying the battery pack to be disconnected next from the power apparatus is performed as a first step, whereafter the current of the identified battery pack measured. For example, the battery pack to be disconnected next from the power apparatus may be determined to be the battery pack having a specific position in the energy storage system. In either way, the measured current of the identified battery pack is provided.

According to at least one example embodiment, the current of the identified battery pack is measured during, or subsequent to, the step of reducing the current of the identified battery pack. Hereby, the measured current can be compared to the predetermined threshold value, and in response to that the measured current of the identified battery pack is lower than the predetermined threshold value, the contactor is opened. As an alternative, the contactor of the identified battery pack is opened in response to that a predetermined time period has lapsed since the step of reducing the current of the identified battery pack. Hereby, the current of the battery pack need not to be measured during, or subsequent to, the step of reducing the current of the identified battery pack, or at least the measured current needs not to be compared to the predetermined threshold value, as it assumed that the current of the identified battery pack has been reduced to be below the predetermined threshold value owing to the lapsed predetermined time period.

Current of a battery pack may in general refer to current in (positive) or current out (negative) of the battery pack. The measured current is typically referring to the absolute value of the measured current or the modulus of the measured value of the current. Correspondingly, the step of reducing the current of the identified battery pack is referring to reducing the absolute value of the current of the identified battery pack.

According to at least one example embodiment, said associated contactor for each battery pack of the switching arrangement is referred to as a main contactor, wherein the switching arrangement further comprises a secondary contactor for each one of the battery packs. According to at least one example embodiment, each secondary contactor is arranged on an opposite side of the battery pack as compared to the corresponding main contactor. Stated differently, the main contactors may be arranged at the positive terminal side of the battery packs and may thus be referred to as positive contactors, and the secondary contactors may be arranged at the negative terminal side of the battery packs and may thus be referred to as negative contactors. The secondary contactors may e.g. be provided for redundancy of the main contactors, and may according to at least one example embodiment be arranged on the same side of the battery pack as the corresponding main contactor (e.g. arranged in series with the corresponding main contactor).

According to at least one example embodiment, each battery pack comprises a plurality of series-connected battery cells. The battery cells may be clustered into battery modules, wherein each battery pack comprises a plurality of series-connected battery modules.

According to at least one example embodiment, the plurality of battery packs is connected to the power apparatus by a common traction voltage bus, wherein the step of reducing the current of the identified battery pack is performed by adjusting the current on the common traction voltage bus.

Thus, by adjusting the current on the common traction voltage bus, the current in the energy storage system at the position of the identified battery pack can be reduced to be below the predetermined threshold value, as previously described. That is, even if the power apparatus is shut off (i.e. no current through the power apparatus), when having a plurality of parallelly arranged battery packs, positive and negative currents may still be present in the common traction voltage bus and in the battery packs connected to the common traction voltage bus. By adjusting the current on the common traction voltage bus, the current of the identified battery pack can be adjusted to be below the predetermined threshold value (e.g. zero, or close to zero) whereafter the associated contactor can be opened. Thereafter, the same procedure can be carried out for other battery packs to be disconnected from the power apparatus, or the operation of the energy storage system continues with the identified battery pack disconnected.

That is, a load connected to the common traction voltage bus may be powered by the battery pack(s) connected to the common traction voltage bus. Correspondingly, a power source connected to the common traction voltage bus may provide power to the battery packs(s) connected to the common traction voltage bus. The common traction voltage bus may be a shared bus for both the load and the power source of the vehicle.

According to at least one example embodiment, the step of adjusting the current on the common traction voltage bus is performed by controlling the operation of the power apparatus.

Hereby, an efficient means for adjusting the current on the common traction voltage bus is provided. That is, the power apparatus may be a controllable power apparatus and may be operated to depart from its shut-off state in order to induce a current on the common traction voltage bus. The adjustment of current may e.g. be based on an induced variance of internal resistance.

According to at least one example embodiment, the switching arrangement comprises a control unit configured to receive the measured current of each one of the plurality battery packs.

Moreover, the control unit may be configured to receive, or determine, various battery pack data of the plurality battery packs, such as e.g. State-of-Charge (SoC), State-of-Health (SoH), etcetera.

According to at least one example embodiment, the method further comprises:
providing measured current of each one of a plurality of battery packs connected to the power apparatus;
in response to the measured current of each one of the plurality of battery packs, evaluating which of the battery packs to be disconnected from the power apparatus.

For example, the battery pack having the lowest current may be chosen as the identified battery pack to be disconnected next.

According to at least one example embodiment, the method further comprises: in response to the battery pack data of the plurality battery packs, evaluating which of the battery packs to be disconnected from the power apparatus.

For example, the battery pack having the lowest SoC or SoH may be chosen as the identified battery pack to be disconnected next. Moreover, if a certain battery pack has been determined to be malfunctioning, such battery pack may typically be identified to be the battery pack to be disconnected next. For example, the method may comprise identifying a predefined error in a battery pack of the plurality of battery packs, the predefined error being included in a group of predefined errors, and in response to identifying the predefined error, identifying such battery pack to be disconnected from the power apparatus.

According to at least one example embodiment, the step of providing the measured current of the identified battery pack is included in the step of providing measured current of each one of a plurality of battery packs connected to the power apparatus.

According to at least one example embodiment, the power apparatus is a controllable load and/or a controllable power source.

According to at least one example embodiment, the power apparatus is a load being a motor and/or an inverter, or the power apparatus is a power source being an external charger, an on-board charger or a fuel cell.

For example, the step of adjusting the current on the common traction voltage bus by controlling the operation of the power apparatus may imply that the power apparatus is operated in 0% efficiency control. Thus, the current on the common traction voltage bus may be controlled by the motor and/or inverter without moving the motor mechanically. However, a load or power source, such as a 24V DCDC converter may still be operating by current on the traction voltage bus.

Thus, the power apparatus being a load and/or a power source may be an external power source, e.g. an external charger connected to the grid.

According to at least one example embodiment, the power apparatus is an on-board charger, a fuel cell, or an electric machine. For example, an electric machine may be operated as an electric motor consuming electricity provided by the battery packs e.g. to provide propulsion power, and may be operated as a generator to generate electricity to charge the battery packs. Thus, the electric machine is an example of a power apparatus being a load and/or a power source. Thus, the power apparatus may be a load, a power source or a combined load/power source. For example, the power apparatus may be a combination of an uncontrollable load and controllable charger.

According to at least one example embodiment, the power apparatus is a brake resistor, or a heater.

Such loads may easily be controlled to adjust the current on the traction voltage bus.

According to at least one example embodiment, the step of providing the measured current of the identified battery pack is performed during a no power operation of the power apparatus.

That is, energy storage system internal currents flowing between the battery packs are measured. For example, the power apparatus is the traction electric machine or on-board charger of the vehicle. Thus, the step of providing the measured current of the identified battery pack is performed during a no power operation of the traction electric machine or on-board charger of the vehicle. The no power operation of the power apparatus may correspond to that the power apparatus is shut off. For a load, that implies no consumption of electricity provided by the battery packs, e.g. no output torque of the electric machine, and for a power source, that implies no generation of electricity to charge the battery packs. However, the step of providing the measured current of the identified battery pack may be performed while the vehicle is operating, e.g. while driving the vehicle (i.e. when the vehicle is propelled).

According to at least one example embodiment, the step of providing the measured current of the identified battery pack is performed during a power ramping down operation of the power apparatus.

According to at least one example embodiment, the step of providing the measured current of the identified battery pack is performed when all loads or power sources connected to the traction voltage bus are in a no power operation. This may be referred to as a no load power of the load and a non-charging event of the power source.

According to at least one example embodiment, at least one battery pack is still connected to the power apparatus during the disconnection of the identified battery pack from the power apparatus.

The connected battery pack is thus another battery pack than the identified battery pack (to be disconnected next).

According to at least one example embodiment, the method further comprises the step of opening the contactor associated with the last connected battery pack to disconnect the battery pack from the power apparatus, such that no battery pack is connected to the power apparatus.

Hereby, all of the battery packs may be disconnected from the power apparatus in an efficient manner.

According to at least one example embodiment, the measured current of the identified battery pack is provided continuously.

According to at least one example embodiment, as an alternative to the step of: in response to that that the measured current of the identified battery pack is higher than a predetermined threshold value, reducing the current of the identified battery pack, the current of the identified battery pack may be reduced in response to that the measured current of the identified battery pack achieves a predetermined first criterium, the predetermined first criterium e.g. being that the measured current of the identified battery pack is higher than the predetermined threshold value, or that the measured current is negative (or positive). Correspondingly, as an alternative to the step of: in response to that the measured current of the identified battery pack is lower than a predetermined threshold value, opening the contactor associated with the identified battery pack to disconnect the battery pack from the power apparatus, the contactor associated with the identified battery pack is opened to disconnect the battery pack from the power apparatus in response to that the measured current achieves a predetermined second criterium, the predetermined second criterium e.g. being that the measured current of the identified battery pack is lower than the predetermined threshold value, or that the measured current is no longer negative (or positive), or that a predetermined time period has lapsed since the step of reducing the current of the identified battery pack. Thus, the current of the identified battery pack may be controlled to be closer to zero, or be controlled to change from a negative current to a positive current (or to a less negative current), or to change from a positive current to a negative current (or to a less positive current).

According to at least one example embodiment, each one of the battery packs is controlled by the control unit, and the measured current of the battery packs is provided continuously to the control unit. Moreover, the control unit may receive other various battery pack data of the plurality battery packs, such as e.g. State-of-Charge (SoC), State-of-Health (SoH), etcetera. Thereafter, the control unit identifies a battery pack of the plurality of connected battery packs to be disconnected next from the power apparatus. The control unit may identify such battery pack based on a decision algorithm. For example, the decision algorithm may be configured to identify a predefined error in a battery pack, the predefined error being included in a group of predefined errors, and in response to identifying the predefined error, identifying such battery pack to be disconnected from the power apparatus. As an alternative, the decision algorithm is configured to identify the battery pack to be disconnected next based on the measured current of the battery packs. Subsequently, the control unit may initiate a reduction of current of the identified battery pack. This is typically performed in response to that that the measured current of the identified battery pack is higher than a predetermined threshold value. The reduction in current may e.g. be achieved by controlling the power apparatus (being a controllable load and/or power source), to adjust the current on the common traction bus, the common traction bus connecting the battery pack with the power apparatus. For example, in case the power apparatus is a motor/inverter, the control unit can request a specific or predetermined discharge current via a CAN communication. In such example, the motor/inverter is operated in 0% efficiency control (i.e. no undesired output torque is achieved). Thereafter, the control unit sends instructions to the associated contactor of the identified battery pack to open. Such action is typically performed in response to that the measured current of the identified battery pack is lower than a predetermined threshold value, or that predetermined time period has lapsed since the step of reducing the current of the identified battery pack.

According to at least a second aspect of the present invention, a switching arrangement for an energy storage system in a vehicle, the energy storage system comprising a plurality of parallelly arranged battery packs, is provided. The switching arrangement comprises:
- an associated contactor for each battery pack, the contactors being configured to connect the battery packs to a power apparatus being a load and/or a power source by closing, and disconnect the battery packs from the power apparatus by opening,
- a control unit configured to:
   - identify a battery pack to be disconnected from the power apparatus, the battery pack being one of a plurality of battery packs connected to the power apparatus,
   - provide measured current of the identified battery pack,
   - in response to the measured current of the identified battery pack being higher than a predetermined threshold value, reduce the current of the identified battery pack, and
   - in response to the measured current of the identified battery pack being lower than the predetermined threshold value, or in response to that a predetermined time period has lapsed since the step of reducing the current of the identified battery pack, open the contactor associated with the identified battery pack to disconnect the battery pack from the power apparatus.

Effects and features of the second aspect of the invention are largely analogous to those described above in connection with the first aspect of the invention. Embodiments mentioned in relation to the first aspect of the invention are largely compatible with the second aspect of the invention, of which some are exemplified below.

According to at least one example embodiment, the switching arrangement comprises a common traction voltage bus connecting the plurality of battery packs with the power apparatus, wherein the control unit is configured to reduce the current of the identified battery pack by adjusting the current on the common traction voltage bus.

The control unit of the switching arrangement may be configured to connect the battery packs to the common traction voltage bus by means of the contactors, and to disconnect the battery pack from the traction voltage bus by means of the contactors. Moreover, the control unit may alternately connect and disconnect the battery packs to and from the common traction voltage bus, wherein, during disconnections, the control unit is configured to control the current of the identified battery pack (to be disconnected next) as previously described.

According to at least one example embodiment, the control unit is configured to adjust the current on the common traction voltage bus by controlling the operation of the power apparatus.

Thus, the power apparatus may be controllable load and/or a controllable power source, which the control unit can control to adjust the current on the common traction voltage bus.

According to a third aspect of the present invention, a vehicle is provided. The vehicle comprises a switching arrangement according the second aspect of the invention. Moreover, the vehicle typically comprises an energy storage system as previously described.

According a fourth aspect of the present invention, a computer program is provided. The computer program comprises program code means for performing the method of the first aspect of the invention, when the program is run on a computer.

Such computer program may e.g. be implemented in an ECU of the vehicle, or e.g. be comprised in the previously described control unit of the switching arrangement.

Thus, it should be understood that the method of the first aspect of the invention may be referred to as a computer-implemented method for operating a switching arrangement of an energy storage system of a vehicle.

According to a fifth aspect of the present invention, a computer readable medium carrying a computer program comprising program code means for performing the method of the first aspect of the invention, when the program product is run on a computer, is provided.

Effects and features of the third to fifth aspects of the invention are largely analogous to those described above in connection with the first and second aspects of the invention. Embodiments mentioned in relation to the first and second aspects of the invention are largely compatible with the third to fifth aspects of the invention.

According to at least one example embodiment, applicable to any one of the first to fifth aspects of the invention, the battery packs are adapted for a vehicle, such as e.g. a heavy duty truck. As the battery packs of the energy storage system are parallelly arranged, the contactors of the switching arrangement may be referred to as being parallelly arranged. That is, at least the contactors used for disconnecting the battery packs from the power apparatus may be referred to as being parallelly arranged.

According to at least one example embodiment, the term disconnecting may be referred to as electrically disconnecting, and the term connecting may be referred to as electrically connecting.

According to at least one example embodiment, the plurality of parallelly arranged battery packs is at least two, or at least three parallelly arranged battery packs. Thus, the switching arrangement comprises a plurality of parallelly arranged contactors, wherein each contactor is capable of connecting and disconnecting an associated battery pack. The plurality of parallelly arranged contactor is at least two, or at least three parallelly arranged contactors.

The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. Even though only one (common) control unit has been described in the present application, it is to be understood that the control unit may be divided into several sub-units, e.g. each battery pack may be associated with a corresponding sub-unit. Moreover, a master control unit may be associated with the switching arrangement or energy storage system, and configured to communicate with the sub-units, e.g. each sub-unit of the battery packs.

Further advantages and features of the present invention are disclosed and discussed in the following description and the accompanying drawings.

### BRIEF DESCRIPTION OF THE DRAWINGS

With reference to the appended drawings, below follows a more detailed description of embodiments of the invention cited as examples. In the drawings:
Fig. 1 is a schematic side view of a vehicle comprising a switching arrangement and an energy storage system, in accordance with example embodiments of the invention,
Fig. 2 is a schematic view of a switching arrangement for an energy storage system in a vehicle, the energy storage system having a plurality of battery packs arranged in parallel, in accordance with an example embodiment of the invention; and
Fig. 3 is a flowchart illustrating the steps of a method in accordance with example embodiments of the invention.

### DETAILED DESCRIPTION OF EXAMPLE EMBODIMENTS OF THE INVENTION

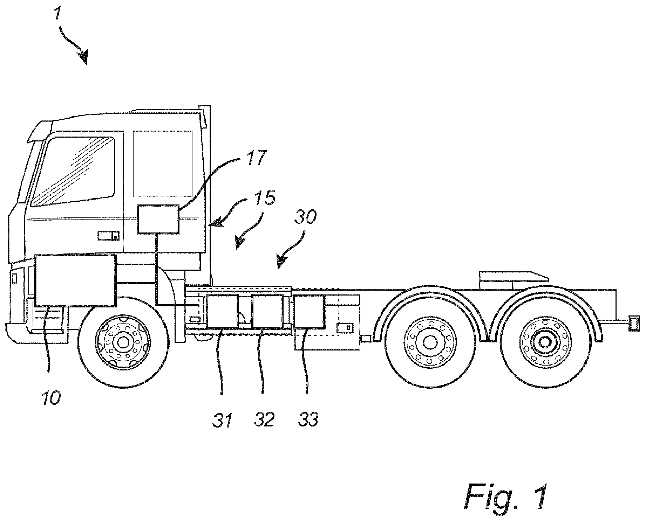

With reference to Fig. 1, a vehicle 1, here embodied as a heavy duty truck 1, is disclosed for which a method, a switching arrangement 15, and/or an energy storage system 30 of a kind disclosed in the present invention is advantageous. However, the method, the switching arrangement 15 or the energy storage system 30 may as well be implemented in other types of vehicles, such as in busses, light-weight trucks, passenger cars, marine applications etcetera. The vehicle 1 is an electric vehicle, such as a full electric vehicle or a hybrid, comprising at least one electric machine 10 powered by the energy storage system 30, wherein in the example of Fig. 1, the energy storage system comprises three energy storage devices 31, 32, 33, or battery packs 31, 32, 33. The switching arrangement 15 is configured to connect and disconnect the battery packs 31, 32, 33 relative the electric machine 10. Moreover, the switching arrangement 15 comprises a control unit 17 arranged and configured for controlling at least the operation of the switching arrangement 15. The vehicle 1 typically further comprises other parts of the powertrain such as transmission, drive shafts and wheels (not shown in detail). The electric machine 10 may be operated as an electric motor consuming electricity provided by the battery packs 31, 32, 33, e.g. to provide propulsion power, and may be operated as a generator to generate electricity to charge the battery packs 31, 32, 33. Thus, the electric machine 10 is an example of a power apparatus being a load and/or a power source.

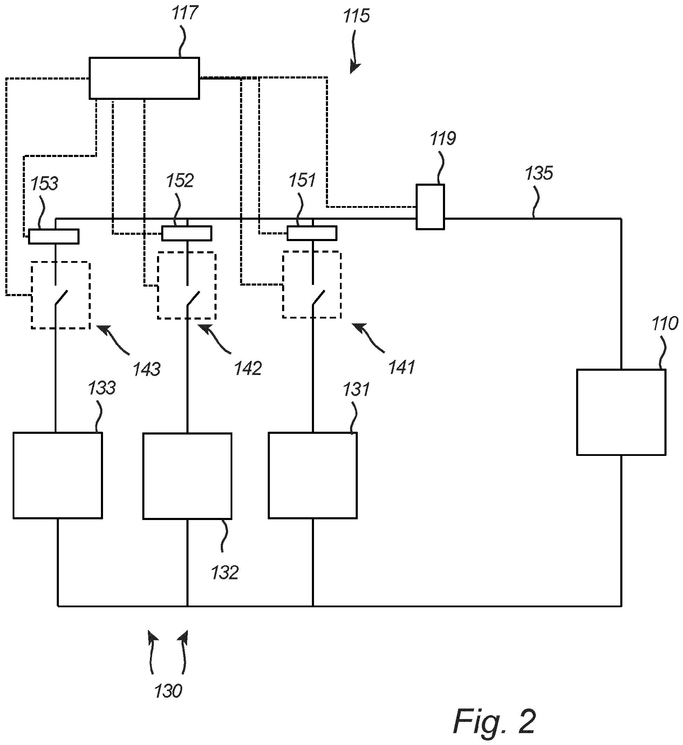

Fig. 2 is a schematic view of a switching arrangement 115 and an energy storage system 130 having a plurality of battery packs 131, 132, 133 arranged in parallel for connection to a power apparatus 110. The embodiment shown in Fig. 2 may be implemented in the vehicle 1 of Fig. 1, and thus the switching arrangement 115, the energy storage system 130 and the power apparatus 110 of Fig. 2, may correspond to the switching arrangement 15, the energy storage system 30 and the electric machine 10 of Fig. 1.

The energy storage system 130 comprises a first battery pack 131, a second battery pack 132 and a third battery pack 133, but it should be noted that any number of battery packs equal to, or higher than, two may be included in the energy storage system 130. The switching arrangement 115 comprises an associated contactor 141, 142, 143 for each battery pack 131, 132, 133. Thus, in more detail, the switching arrangement 115 comprises a first contactor 141 configured to connect and disconnect the first battery pack 131 to and from to the power apparatus 110 by closing and opening, respectively, and comprises a second contactor 142 configured to connect and disconnect the second battery pack 132 to and from the power apparatus 110 by closing and opening, respectively, and comprising a third contactor 143 configured to connect and disconnect the third battery pack 133 to and from the power apparatus 110 by closing and opening, respectively. Thus, an associated contactor, here being the first, second and third contactors 141, 142, 143, is provided for each battery pack, here being the corresponding first, second and third battery packs 131, 132, 133.

As shown in Fig. 2, the first, the second and third battery packs 131,132, 133 may be connected to the power apparatus 110 via a common traction voltage bus 135 (may also be referred to as a common traction power bus) arranged between the first, second and third contactors 141, 142, 143 and the power apparatus 110. The first contactor 141, and the corresponding first battery pack 131, are arranged adjacent the power apparatus 110, while the third contactor 143, and the corresponding third battery pack 133, are arranged furthest away from the power apparatus 110, while the second contactor 142, and the corresponding second battery pack 132, are arranged between the first and third contactors 141, 143. The power apparatus 110 may be powered by all, or any one, of the first, second and third battery packs 131, 132, 133 by closing the corresponding first, second and third contactors 141, 142, 143 (i.e. by connecting the first, second and third battery packs 131, 132, 133 to the common traction voltage bus 135, and hence the power apparatus 110) in case the power apparatus 110 is a load. Correspondingly, the power apparatus 110 may charge all, or any one, of the first, second and third battery packs 131, 132, 133 by closing the corresponding first, second and third contactors 141, 142, 143 (i.e. by connecting the first, second and third battery packs 131, 132, 133 to the common traction voltage bus 135, and hence the power apparatus 110) in case the power apparatus 110 is a power source.

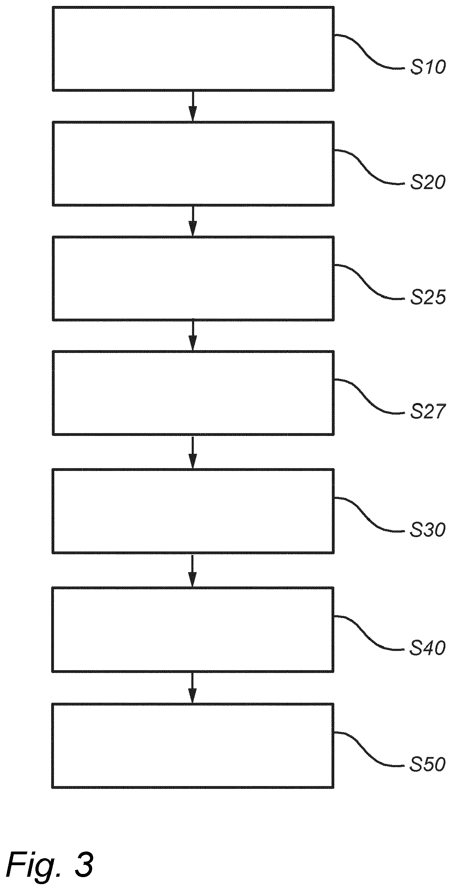

Any one of, or all of, the first, second and third battery packs 131, 132, 133 may be disconnected from the power apparatus 110 by opening the corresponding the first, second and third contactors 141, 142, 143. The switching arrangement 115 comprises a control unit 117 configured to control the operation of at least the switching arrangement 115, which is further described with reference to the flow chart of Fig. 3.The switching arrangement 115 is, via the control unit 117, configured to disconnect the first, second and third battery packs 131, 132, 133 from the common traction voltage bus 135 and the power apparatus 110 by means of the first, second and third contactors 141, 142, 143, respectively, such that the first, second and third battery packs 131, 132, 133 are disconnected in a sequence in which one contactor, e.g. the first contactor 141, is opened first, thereafter another contactor is opened, e.g. the second contactor 142, and finally the last contactor is opened, e.g. the third contactor 143.

For example, in a first state, being a fully connected state, each one of the first, second and third contactors 141, 142, 143 are closed and each one of the first, second and third battery packs 131, 132, 133 are connected to the power apparatus 110 (for powering the power apparatus 110, or for being charged by the power apparatus 110). In a second state, being a disconnection state, one, two, or all three of the first, second and third contactors 141, 142, 143 are opened to disconnect the corresponding first, second and/or third battery pack 131, 132, 133 from the common traction voltage bus 135, which will be further described below.

In a scenario in which the power apparatus 110 is operated in a no power operation (e.g. by being shut off, but not disconnected from all of the battery packs 131, 132, 133), or is ramping down, energy storage system internal currents may still be flowing between the battery packs 131, 132, 133 connected by the common traction voltage bus 135. Such energy storage system internal currents may be large enough to cause damage to the contactors 141, 142, 143 (i.e. contactor wear) e.g. due to arcing upon contactor opening. For example, in case all three battery packs 131, 132, 133 of the embodiment in Fig. 2 is connected to the common traction voltage bus 135, an energy storage system internal current may flow from the first battery pack 131 to the second battery pack 132, while there is no current flowing in or out of the third battery pack 133. Thus, opening the first and/or the second contactors 141, 142 will result in contactor wear due to the present current in the first and second battery packs 131, 132. However, opening the third contactor 143 will no result in such contactor wear as there is no current flowing in or out of the third battery pack 133.

The control unit 117 may be further configured to detect, and measure, the current, or another type of battery pack data, by means of a first sensor 151 for the first battery pack 131, a second sensor 152 for the second battery pack 132 and a third sensor 153 for the third battery pack 133. The first, second and third sensors 151, 152, 153 are for example configured to detect the previously described energy storage system internal currents. Hereby, measured current of the battery packs 131, 132, 133 may be provided and received by the control unit 117. Moreover, the control unit 117 may receive any battery pack data measurable from the sensors 151, 152, 153 and thereby determine e.g. State-of-Charge (SoC), State-of-Health (SoH), etcetera, or identify a predefined error in any one of the battery packs 131, 132, 133. Moreover, the control unit 117 may be configured to detect, and measure the current at the common traction bus 135 by means of a fourth sensor 119.

Thus, energy storage system internal currents flowing between any of the battery packs 131, 132, 133 may be measured by the first, second and third sensors 151, 152, 153, respectively. That is, and according to at least one example embodiment, the current of the battery packs 131, 132, 133 are measured during a no power operation of the power apparatus 110.

The switching arrangement 115 is, via the control unit 117, is configured to identify a battery pack, e.g. the first battery pack 131, to be disconnected next from the power apparatus 110 and the common traction voltage bus 135. This decision is typically made by the control unit 117 in the previously mentioned fully connected state in which all of the battery packs 131, 132, 133 are connected to the power apparatus 110 and the common traction voltage bus 135. As previously described, the control unit 117 is configured to provide measured current of the battery packs 131, 132, 133, and will thus provide measured current of the identified battery pack, in this case the first battery pack 131 by the first sensor 151.

The control unit 117 is furthermore configured to compare the measured current of the identified battery pack with a predetermined threshold value, and in response to the measured current of the identified battery pack being higher than the predetermined threshold value, to reduce the current of the identified battery pack. That is, in this case, in response to that the measured current of the first battery pack 131 is higher than the predetermined threshold value, the control unit 117 is configured to reduce the current of the first battery pack 131. This may e.g. be achieved by that the control unit 117 controls the power apparatus 110, and adjusts the current on the common traction voltage bus 135 by controlling the operation of the power apparatus 110.

The control unit 117 is furthermore configured to, in response to that the measured current of the identified battery pack, here being the first battery pack 131, is lower than the predetermined threshold value, or in response to that a predetermined time period has lapsed since the step of reducing the current of the identified battery pack, open the contactor associated with the identified battery pack, here being the first contactor 141, to disconnect the first battery pack from 131 the power apparatus 110 and the common traction voltage bus 135. Thus, by reducing the current of the first battery pack 131 by adjusting the current on the common traction voltage bus 135 by controlling the operation of the power apparatus 110, the current of the first battery pack 131 may be brought down to be below the predetermined threshold value (e.g. verified by compared measured current of the first battery pack 131 with the predetermined threshold value, or simply by waiting for the predetermined time period to lapse, for when it is assumed the current of the first battery pack 131 is below the predetermined threshold value), and the first contactor 141 can be opened with a reduced contactor wear as compared to open the first contactor 141 without reducing the current.

The control unit 117 may furthermore be configured to control the sequence in which the first, second and third battery packs 131, 132, 133 are disconnected. Thus, after disconnecting the first battery pack 131 as described above, the same procedure may be performed in order to disconnect the second or third battery packs 132, 133. During disconnection of the last battery pack from the power apparatus 110 (i.e. such that no battery pack is connected to the power apparatus 110), no current is typically flowing in the energy storage system 130 if the power apparatus 110 have already been shut off, why no active reduction in the current is needed when disconnecting the last battery pack from the power apparatus 110 and the common traction voltage bus 135.

The switching arrangement 115 may, via the control unit 117, further be configured to connect any one of, or all of, the first, second and third battery packs 131, 132, 133 by means of the first, second and third contactors 141, 142, 143, respectively, to the power apparatus 110. Thus, between subsequent disconnection of the battery packs 131, 132, 133, the battery packs 131, 132, 133 may be connected to the power apparatus 110. The switching arrangement 115 may, via the control unit 117, be further configured to alternately connect and disconnect the first, second and third battery packs 131, 132, 133, to and from the power apparatus 110 wherein, during disconnections from the power apparatus 110, the switching arrangement 115 is configured to control the sequence in which the first, second and third battery packs 131, 132, 133 are disconnected from the power apparatus0 110 as previously described.

It should be mentioned that the switching arrangement may further comprise a first secondary contactor arranged in parallel to the first contactor 141, wherein the first secondary contactor is arranged in series with a first pre-charge resistor, and comprise a second secondary contactor arranged in parallel to the second contactor 142, wherein the second secondary contactor is arranged in series with a second pre-charge resistor, and comprise a third secondary contactor arranged in parallel to the third contactor 143, wherein the third secondary contactor is arranged in series with a third pre-charge resistor. Moreover, the first battery pack 131 may be connected in series with a first pre-contactor arranged on the opposite side of the first battery pack 131 as compared to the first contactor 141. Correspondingly, the second battery pack 132 may be connected in series with a second pre-contactor arranged on the opposite side of the second battery pack 132 as compared to the second contactor 142, and the third battery pack 133 may be connected in series with a third pre-contactor arranged on the opposite side of the third battery pack 133 as compared to the third contactor 143.

The operation of a switching arrangement, as the switching arrangement 115, will now be described in more general terms with additional reference to Fig. 3. Fig. 3 is a flowchart describing the steps of a method for operating a switching arrangement of an energy storage system of a vehicle, the energy storage system comprising a plurality of parallelly arranged battery packs, e.g. the first, second and third battery packs 131, 132, 133 of Fig. 2, and the switching arrangement comprising an associated contactor for each battery pack, as the first, second and third contactors 141, 142, 143 of Fig. 2. The contactors are configured to connect and disconnect the battery packs to and from a power apparatus by closing and opening, respectively.

In a first step S10, a battery pack to be disconnected from the power apparatus is identified, the battery pack being one of a plurality of battery packs connected to the power apparatus.

In a second step S20, measured current of the identified battery pack is provided. However, it should be noted that the second step S20 may be performed prior to the first step S10, typically including providing measured current of all the connected battery packs. Such information may be used as input into determining which of the battery packs to disconnect next.

In a third step S30, performed in response to that that the measured current of the identified battery pack is higher than a predetermined threshold value, the current of the identified battery pack is reduced.

In a fourth step S40, performed in response to that the measured current of the identified battery pack is lower than the predetermined threshold value, or in response to that a predetermined time period has lapsed since the step S30 of reducing the current of the identified battery pack, the contactor associated with the identified battery pack is opened to disconnect the battery pack from the power apparatus. Typically, at least one battery pack is still connected to the power apparatus during the disconnection of the identified battery pack from the power apparatus.

In a first optional sub-step, S25, measured current of each one of a plurality of battery packs connected to the power apparatus is provided. Moreover, in a second optional sub-step, S27, which of the battery packs to be disconnected from the power apparatus is evaluated. This is typically performed in response to the measured current of all of the battery packs. Any one of the second step S20, and the first optional sub-step S25 may be performed during a no power operation of the power apparatus (e.g. when the power apparatus is shut off). Moreover, in any one of the second step S20, and the first optional sub-step S25, the measured current of any battery pack may be measured or provided continuously. The first optional sub-step, S25, and the second step S20 may be combined into one step.

In a final disconnection step, S50, the contactor associated with the last connected battery pack is opened to disconnect the battery pack from the power apparatus, such that no battery pack is connected to the power apparatus.

As described with reference to the embodiment of Fig. 2, the plurality of battery packs is preferably connected to the power apparatus by a common traction voltage bus. Thus, the step of reducing the current of the identified battery pack is preferably performed by adjusting the current on the common traction voltage bus. The step of adjusting the current on the common traction voltage bus may as previously been described be performed by controlling the operation of the power apparatus.

Typically, the switching arrangement comprises a control unit configured to receive the measured current of each one of the plurality battery packs. This may e.g. be achieved by the control unit 117 and the first, second and third sensors 151, 152, 153 of the switching arrangement 115 of Fig. 2.

As previously described, the power apparatus is typically a controllable power apparatus, which the control unit may control to adjust the current on the common traction voltage bus. The power apparatus is e.g. a load being a motor and/or an inverter. The power apparatus may be a power source, such as e.g. an on-board charger.

It should be noted that the naming of the steps not necessarily, but might according to at least one example embodiment, relate to the order in which the steps are carried out, unless explicitly stated otherwise. For example, the first and second steps S10, S20 may be carried out in a different order. Moreover, one or more of the steps may be combined and carried out simultaneously. The switching arrangement 115 of Fig. 2 may be configured to carry out one or several of the steps S10-S50.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for operating a switching arrangement of an energy storage system of a vehicle, the energy storage system comprising a plurality of parallelly arranged battery packs and the switching arrangement comprising an associated contactor for each battery pack, the contactors being configured to connect the battery packs to a power apparatus being a load and/or a power source by closing, and disconnect the battery packs from the power apparatus by opening, the method comprising:
- identifying a battery pack to be disconnected from the power apparatus, the battery pack being one of a plurality of battery packs connected to the power apparatus,
- providing measured current of the identified battery pack,
- in response to that that the measured current of the identified battery pack is higher than a predetermined threshold value, reducing the current of the identified battery pack, and
- in response to that the measured current of the identified battery pack is lower than the predetermined threshold value, or in response to that a predetermined time period has lapsed since the step of reducing the current of the identified battery pack, opening the contactor associated with the identified battery pack to disconnect the battery pack from the power apparatus.

2. The method according to any one of the preceding claims, wherein the plurality of battery packs is connected to the power apparatus by a common traction voltage bus, wherein the step of reducing the current of the identified battery pack is performed by adjusting the current on the common traction voltage bus.

3. The method according to claim 2, wherein the step of adjusting the current on the common traction voltage bus is performed by controlling the operation of the power apparatus.

4. The method according to any one of the preceding claims, wherein the switching arrangement comprises a control unit configured to receive the measured current of each one of the plurality battery packs.

5. The method according to claim 4, further comprising:
- providing measured current of each one of a plurality of battery packs connected to the power apparatus;
- in response to the measured current of each one of the plurality of battery packs, evaluating which of the battery packs to be disconnected from the power apparatus.

6. The method according to any one of the preceding claims, wherein the power apparatus is a load being a motor and/or an inverter, or wherein the power apparatus is a power source being an external charger, an on-board charger or a fuel cell.

7. The method according to any one of the preceding claims, wherein the step of providing the measured current of the identified battery pack is performed during a no power operation of the power apparatus.

8. The method according to any one of the preceding claims, wherein at least one battery pack is still connected to the power apparatus during the disconnection of the identified battery pack from the power apparatus.

9. The method according to claim 8, further comprising the step of opening the contactor associated with the last connected battery pack to disconnect the battery pack from the power apparatus, such that no battery pack is connected to the power apparatus.

10. The method according to any one of the preceding claims, wherein the measured current of the identified battery pack is provided continuously.

11. A switching arrangement for an energy storage system in a vehicle, the energy storage system comprising a plurality of parallelly arranged battery packs, the switching arrangement comprising:
- an associated contactor for each battery pack, the contactors being configured to connect the battery packs to a power apparatus being a load and/or a power source by closing, and disconnect the battery packs from the power apparatus by opening,
- a control unit configured to:
- identify a battery pack to be disconnected from the power apparatus, the battery pack being one of a plurality of battery packs connected to the power apparatus,
- provide measured current of the identified battery pack,
- in response to the measured current of the identified battery pack being higher than a predetermined threshold value, reduce the current of the identified battery pack, and
- in response to the measured current of the identified battery pack being lower than the predetermined threshold value, or in response to that a predetermined time period has lapsed since the step of reducing the current of the identified battery pack, open the contactor associated with the identified battery pack to disconnect the battery pack from the power apparatus.

12. The switching arrangement according to claim 11, wherein the switching arrangement comprises a common traction voltage bus connecting the plurality of battery packs with the power apparatus, wherein the control unit is configured to reduce the current of the identified battery pack by adjusting the current on the common traction voltage bus.

13. The switching arrangement according to claim 12, wherein the control unit is configured to adjust the current on the common traction voltage bus by controlling the operation of the power apparatus.

14. A computer program comprising program code means for performing the method according to any one of claims 1-10, when the program is run on a computer.

15. A computer readable medium carrying a computer program comprising program code means for performing the method according to any one of claims 1-10, when the program product is run on a computer.
